# EUROPÄISCHE PATENTSCHRIFT

(11) **EP 0 569 851 B1**
(45) Veröffentlichungstag und Bekanntmachung des Hinweises auf die Patenterteilung: **13.08.1997**
(21) Anmeldenummer: 93107364.7
(22) Anmeldetag: 06.05.1993
(51) Int. Cl.: B01L 3/02, G01N 35/10

(54) **Pipettiervorrichtung**
Pipetting device
Dispositif de pipettage

(30) Priorität: 15.05.1992 DE 4216128
(43) Veröffentlichungstag der Anmeldung: 18.11.1993
(73) Patentinhaber: BEHRINGWERKE Aktiengesellschaft, 35001 Marburg (DE)
(72) Erfinder: Kressirer, Rudolf, W-6233 Kelkheim (Taunus) (DE)
(74) Vertreter: Kachholz, Traudel

(56) Entgegenhaltungen:
- EP-A- 0 316 698
- EP-A- 0 463 468
- DE-U- 9 111 441
- PATENT ABSTRACTS OF JAPAN vol. 12, no. 28 (C-471)27. Januar 1988

## Beschreibung

Die Erfindung betrifft eine Pipettiervorrichtung zum Mischen Von Flüssigkeiten, in der ein Pipettierröhrchen in einer bewegbaren Aufnahmeeinrichtung angeordnet und mit einer flexiblen Zuleitung verbunden ist.

Pipettiervorrichtungen der genannten Art sind bekannt, beispielsweise aus der JP-A-62179380 (D1). Sie können zur quantitativen Proteinbestimmung in Körperflüssigkeiten wie z.B. Serum, Urin oder Rückenmarksflüssigkeit verwendet werden. Dazu werden diese gegebenenfalls verdünnt und mit Reagenz (Antiserum) in definiertem Volumenverhältnis gemischt und die durch die Reaktion eintretende Trübung gemessen. Die Flüssigkeiten können mit einer solchen Pipettiervorrichtung gehandhabt und mit einem separaten Rührer vermischt werden. Nachteilig hierbei ist der zusätzliche Platzbedarf für den Rührer, die zusätzliche Verschleppung von Probenmaterial, was die Genauigkeit der Messergebnisse bei empfindlichen Tests beeinflußt. Nachteilig ist ferner der zusätzliche Wärmeeintrag durch den Rührer, der ein Konstanthalten der Reaktionstemperatur stört und damit ebenfalls die Genauigkeit der Messergebnisse beeinflußt.

Hier will die Erfindung Abhilfe schaffen. Die Erfindung löst die Aufgabe durch eine Pipettiervorrichtung, der eingangs genannten Art, die dadurch gekennzeichnet ist, daß die Aufnahmeeinrichtung in einer Halterung drehbar gelagert und über eine Kupplung mit einem Exzenterantrieb verbunden ist.

Die Kupplung kann aus zwei Andrucksrollen und der Exzenterantrieb aus einem Exzenter bestehen, der auf der Welle eines Motors angeordnet ist. Der Exzenter mit Motor kann auf der Halterung für die Aufnahmeeinrichtung angeordnet sein. Das Pipettierröhrchen kann mit einer Heizeinrichtung versehen sein und in zwei Zonen unterteilt sein, wobei die erste Zone die Pipettierspitze, die ein verhältnismäßig kleines Pipettiervolumen umfasst, enthält und die sich daran anschliessende zweite Zone ein gegenüber der ersten Zone größeres Pipettiervolumen aufweist. In der ersten Zone kann das Pipettierröhrchen gerade verlaufen und in der zweiten Zone gewunden sein und an einem Wärmeträger anlegen. Ferner kann das Pipettierröhrchen mit einer Kupplung für eine Zuleitung versehen sein, die auf der Aufnahmeeinrichtung angeordnet ist.

Die Vorteile der Erfindung sind im wesentlichen darin zu sehen, das sich Dosiervolumina für die einzelnen Komponenten bis 2 µl mit einer Genauigkeit von 1 % und das Mischen der Komponenten erzielen lassen.

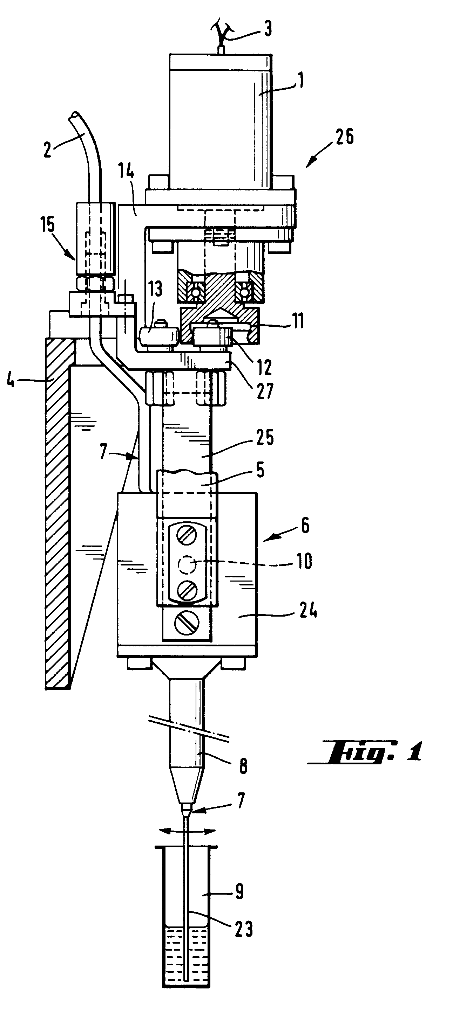

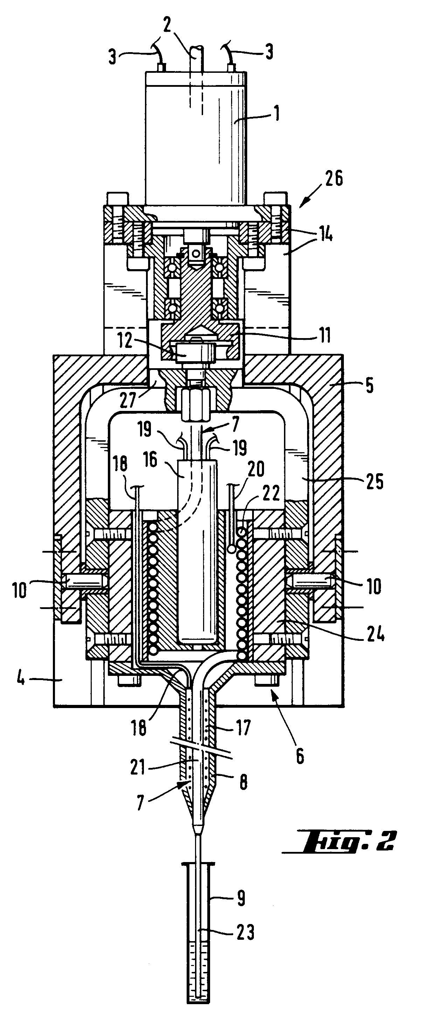

Die Erfindung wird im folgenden anhand eines Ausführungsbeispiels näher erläutert, aus dem sich weitere wichtige Merkmale ergeben. Es zeigt Figur 1 die Pipettiervorrichtung von vorn, teilweise geschnitten und Figur 2 die Pipettiervorrichtung von der Seite, teilweise geschnitten.

Das Pipettierröhrchen (7) ist in einer Aufnahmeeinrichtung (6) angeordnet. Die Aufnahmeeinrichtung (6) besteht aus einer U-förmigen Zarge (25) und einer Hülse (24). Die Zarge (25) ist in einer Halterung (5) über ein Gelenk (10) drehbar gelagert und über eine Kupplung, z.B. Andrucksrollen (12, 13) mit einem Exzenterantrieb (26) verbunden. Der Exzenterantrieb (26) besteht im wesentlichen aus dem Exzenter (11) und dem Motor (1) mit Zuleitung (3). Der Exzenterantrieb (26) ist auf der Halterung (5) angeordnet, die Halterung (5) ist mit einer Trägerplatte (4) versehen. Die Zarge (25) ist mit einer Traverse (27) versehen, die die Andrucksrollen (12, 13) und eine Kupplung (15) trägt, die die Verbindung des Pipettierröhrchens (7) mit einer elastischen Zuleitung (2) herstellt. Das Pipettierröhrchen (7) weist eine erste Zone (21) auf, die gerade ausgeführt ist und die Pipettierspitze (23) mit einem verhältnismäßig kleinen Pipettiervolumen trägt und eine sich daran anschließende zweite Zone (22), die gewunden ausgeführt ist. In der ersten Zone (21) ist das Pipettierröhrchen (7) mit einer Heizung (17) versehen und in der zweiten Zone mit einem Wärmeträger, einer Heizpatrone (16). Die Heizungen (16, 17) können voneinander getrennt arbeiten. Mit (8) sind ein Stützrohr für den geraden Teil (Zone 21) des Pipettierröhrchens (7), mit (18, 19) die Zuleitungen für die Heizungen (16, 17), mit (14) die Halterung für den Motor (1) und mit (20) ein Temperatursensor angedeutet. Mit dem Exzenterantrieb (26) wird das Pipettierröhrchen (7) wie mit Pfeil angedeutet in eine hin- und herschwingende Bewegung gebracht, wodurch der Inhalt der Cuvette (9) bewegt und damit gemischt wird.

## Patentansprüche

1. Pipettiervorrichtung zum Mischen von Flüssigkeiten, in der ein Pipettierröhrchen in einer bewegbaren Aufnahmeeinrichtung angeordnet und mit einer flexiblen Zuleitung verbunden ist, dadurch gekennzeichnet, daß die Aufnahmeeinrichtung (6) in einer Halterung (5) drehbar (10) gelagert und über eine Kupplung (12, 13) mit einem Exzenterantrieb (26) verbunden ist.

2. Vorrichtung nach Anspruch 1, dadurch gekennzeichnet, daß die Kupplung aus zwei Andruckrollen (12, 13) und der Exzenterantrieb (26) aus einem Exzenter (11) besteht, der auf der Welle eines Motors (1) angeordnet ist.

3. Vorrichtung nach Anspruch 1, dadurch gekennzeichnet, daß der Exzenterantrieb (26) auf der Halterung (5) für die Aufnahmeeinrichtung (6) angeordnet ist.

4. Vorrichtung nach Anspruch 1, dadurch gekennzeichnet, daß das Pipettierröhrchen (7) mit einer Heizeinrichtung (16, 17) versehen ist und in zwei Zonen (21, 22) unterteilt ist, wobei die erste Zone (21) die Pipettierspitze (23), die ein verhältnismäßig kleines Pipettiervolumen umfaßt, enthält und die sich daran anschließende zweite Zone (22) ein gegenüber der ersten Zone größeres Pipettiervolumen aufweist.

5. Vorrichtung nach Anspruch 4, dadurch gekennzeichnet, daß das Pipettierröhrchen (7) in der ersten Zone (21) gerade verläuft und in der zweiten Zone (22) gewunden.

6. Vorrichtung nach Anspruch 4, dadurch gekennzeichnet, daß das Pipettieröhrchen (7) im Bereich der zweiten Zone (22) an einem wärmeleitenden Wärmeträger (16) anliegt.

7. Vorrichtung nach Anspruch 1, dadurch gekennzeichnet, daß das Pipettierröhrchen mit einer Kupplung (15) für eine Zuleitung (2) versehen ist, die auf der Aufnahmeeinrichtung (6) angeordnet ist.

## Claims

1. A pipetting device for mixing liquids, in which a pipetting tube is located in a movable receiving arrangement and is connected to a flexible feedline, wherein the receiving arrangement (6) is rotatably (10) mounted in a mounting device (5) and is connected via a coupling (12, 13) to an eccentric drive (26).

2. A device as claimed in claim 1, wherein the coupling comprises two pressure rollers (12, 13) and the eccentric drive (26) comprises an eccentric (11) which is arranged on the shaft of a motor (1).

3. A device as claimed in claim 1, wherein the eccentric drive (26) is arranged on the mounting device (5) for the receiving arrangement (6).

4. A device as claimed in claim 1, wherein the pipetting tube (7) is provided with a heating device (16, 17) and is divided into two zones (21, 22), where the first zone (21) contains the pipetting tip (23) which has a relatively small pipetting volume, and the second zone (22) connected thereto has a pipetting volume larger than the first zone.

5. A device as claimed in claim 4, wherein the pipetting tube (7) is straight in the first zone (21) and coiled in the second zone (22).

6. A device as claimed in claim 4, wherein the pipetting tube (7) is in contact with a heat-conducting heat transfer means (16) in the region of the second zone (22).

7. A device as claimed in claim 1, wherein the pipetting tube is provided with a coupling (15) for a feedline (2) which is located on the receiving arrangement (6).

## Revendications

1. Dispositif de prélèvement à pipette pour le mélange de liquides, dans lequel un petit tube de prélèvement à la pipette est disposé dans un dispositif mobile de réception et est relié à une canalisation d'amenée flexible, caractérisé en ce que le dispositif de réception (6) est monté de manière à pouvoir pivoter (10) dans un support (5) et est relié par l'intermédiaire d'un accouplement (12,13) à un dispositif d'entraînement à excentrique (26).

2. Dispositif selon la revendication 1, caractérisé en ce que l'accouplement est constitué de deux galets de serrage (12,13) et que le dispositif d'entraînement à excentrique (26) est constitué par un excentrique (11), qui est monté sur l'arbre d'un moteur (1).

3. Dispositif selon la revendication 1, caractérisé en ce que le dispositif d'entraînement à excentrique (26) est disposé sur le support (5) pour le dispositif de réception (6).

4. Dispositif selon la revendication 1, caractérisé en ce que le petit tube (7) de prélèvement à la pipette est équipé d'un dispositif de chauffage (16,17) et est subdivisé en deux zones (21,22), la première zone (21) contenant la pointe (23) de prelèvement à la pipette, qui comprend un volume comparativement petit de prelèvement à la pipette, et la seconde zone (22) qui sec raccorde à la première zone, possède un volume de prélèvement à la pipette qui est supérieur à celui de la première zone.

5. Dispositif selon la revendication 4, caractérisé en ce que le petit tube (17) de prélèvement à la pipette est rectiligne dans la première zone (21) et est enroulé en hélice dans la seconde zone (22).

6. Dispositif selon la revendication 4, caractérisé en ce que le petit tube (7) de prélèvement à la pipette s'applique, au niveau de la seconde zone (22), contre un dispositif de transfert thermique thermoconducteur (16).

7. Dispositif selon la revendication 1, caractérisé en ce que le petit tube de prélèvement à la pipette est équipé d'un raccord (15) pour une canalisation d'amenée (2) qui est disposé sur le dispositif de réception (6).
